# EUROPÄISCHE PATENTSCHRIFT

(11) **EP 1 586 190 B1**
(45) Veröffentlichungstag und Bekanntmachung des Hinweises auf die Patenterteilung: **24.05.2006**
(21) Anmeldenummer: 03799413.4
(22) Anmeldetag: 01.09.2003
(51) Int. Cl.: H04M 1/02, H04M 1/725

(54) **MOBILTELEFON MIT SCHWENKBARER KAMERA**
MOBILE TELEPHONE FITTED WITH A PIVOTAL CAMERA
TELEPHONE MOBILE MUNI D'UNE CAMERA PIVOTANTE

(30) Priorität: 23.01.2003 DE 10302640
(43) Veröffentlichungstag der Anmeldung: 19.10.2005
(73) Patentinhaber: BenQ Mobile GmbH & Co. oHG, 81667 München (DE); BenQ Corporation, Gueishan Taoyuan 333 (TW)
(72) Erfinder: GÖBEL, Klaus, 81927 München (DE); HÖCKENREINER, Hans-Peter, 82110 Germering (DE)
(74) Vertreter: Epping - Hermann - Fischer
(86) Internationale Anmeldenummer: PCT/EP2003/009707
(87) Internationale Veröffentlichungsnummer: WO 2004/066598

(56) Entgegenhaltungen:
- EP-A- 1 320 020
- US-A1- 2001 004 269
- US-A1- 2002 051 060
- US-B1- 6 473 631

## Beschreibung

Die Erfindung betrifft ein Mobiltelefon mit Kamera, mindestens bestehend aus einem Gehäuse, einem Display und einem Tastenfeld zur Eingabe von manuellen Befehlen.

Aktuell werden Mobiltelefone vermehrt mit Kameras ausgestattet, um zusätzlich zu Textnachrichten und Sprachnachrichten auch Fotos aufnehmen und übermitteln zu können. Bei Mobiltelefonen mit Kamera sind mehrere Anforderungen zu berücksichtigen.

Die Kamera sollte derart am beziehungsweise im Mobiltelefon angebracht werden, dass das typische Gerätedesign eines Mobiltelefons erhalten bleibt. So sollte die zusätzliche Kamera die Außenabmessungen des Mobiltelefons nicht vergrößern, da hierdurch zum Beispiel die Haptik und/oder Handhabung des Mobiltelefons gestört wird. Dies lässt vermuten, dass besonders kleine Kameramodule am/in Mobiltelefonen angebracht werden. Dem steht jedoch der Wunsch des Endkunden nach hochauflösenden und qualitativ hochwertigen Kameramodulen entgegen. Diese hochwertigen Kameramodule haben in der Regel aber größere Abmessungen als minderwertige und kleinere Kameramodule.

Eine weitere Anforderung bei der Ausstattung eines Mobiltelefons mit Kamera ist, dass sowohl Aufnahmen der Umgebung als auch Selbstportraitaufnahmen des Mobiltelefonbenutzers ermöglicht werden sollen. Um hierbei den korrekten Aufnahme-/Positionsbereich des zu fotografierenden Objekts kontrollieren zu können, sollte ein "Kontrollbild" im Display des Mobiltelefons zu sehen sein. Hierzu sollte die Kamera um einen Schwenkbereich von circa 180 Grad drehbar gelagert sein.

Außerdem besteht der Wunsch beziehungsweise die Notwendigkeit, die optischen Komponenten der Kamera bei Nichtbenutzung gegen Verschmutzen und gegen Verkratzen zu schützen.

Es existieren bereits Lösungen und Lösungsansätze, um ein Mobiltelefon mit Kamera auszustatten. Diese bisherigen Lösungen und Lösungsansätze erfüllen jedoch die oben genannten Anforderungen nicht oder nur teilweise. Diese Lösungen und Lösungsansätze werden im Folgenden kurz vorgestellt:

Eine Möglichkeit, ein Mobiltelefon mit Kamera zu versehen, besteht in der Integration der Kamera in einem separaten Aufsteckmodul. Dieses Aufsteckmodul, das meist drehbar ausgeführt ist, wird bei Bedarf an ein Mobiltelefon angekoppelt. Ein Nachteil dieser Lösung ist, dass die Kamera im Aufsteckmodul und nicht im Mobiltelefon integriert ist. Durch die Vergrößerung der Gesamtabmessungen bei adaptiertem Aufsteckmodul ist die Handhabung eines Mobiltelefons meist unpraktisch und unhandlich. In der Praxis wird aus diesem Grund das separate Aufsteckmodul vom Mobiltelefonbesitzer meist aus Bequemlichkeit nicht mitgeführt.

Eine weitere Möglichkeit besteht darin, eine Kamera auf der Rückseite des Mobiltelefons zu integrieren, das heißt, die Kamera befindet sich meist auf der Gegenseite des Mobiltelefondisplays. Um die Kameralinse vor Verkratzungen zu schützen, ist bei dieser Kameraintegrationsmöglichkeit bereits ein Schiebeverschluss der Kameraoptik im Einsatz. Ein Nachteil dieser Lösung ist, dass Selbstportraitaufnahmen des Mobiltelefonbenutzers nur möglich sind, ohne die Kameraaufnahmen im Display des Mobiltelefons kontrollieren zu können.

Eine Verbesserung zur "Integration einer Kamera auf der Rückseite des Mobiltelefons", wäre die Integration von zwei Kameras jeweils auf der Vorder- und der Rückseite des Mobiltelefons. Der Vorteil dieser Lösung ist, dass nun sowohl Aufnahmen der Umgebung als auch Selbstportraitaufnahmen des Mobiltelefonbenutzers ermöglicht werden, wobei der Mobiltelefonbenutzer die Kameraaufnahmen im Display des Mobiltelefons sehen kann. Nachteilig wirken sich zum einen der erhöhte Platzbedarf für zwei Kameramodule und zum anderen der erhöhte Kostenfaktor für die "doppelte" Anzahl an Kameramodule aus. Durch die Integration von zwei Kameras im Mobiltelefon ist außerdem eine Kostenverdoppelung beim Schutzmechanismus für die Kameraoptik zu verbuchen.

Eine weitere bekannte Kameraintegrationsmöglichkeit wird bei Mobiltelefonen angewendet, die aus zwei gegeneinander verschiebbare Hälften bestehen. Hier wird die Kamera in einer Hälfte integriert. Im zusammengeschobenen Zustand ist die Kamera zwischen den Hälften vor Verkratzen der optischen Teile geschützt. Bei dieser Lösung können wiederum nur Selbstportraitaufnahmen des Mobiltelefonbenutzers gemacht werden, ohne die Kameraaufnahmen im Display des Mobiltelefons kontrollieren zu können. Außerdem ist bei dieser Kameraintegrationsmöglichkeit die Dicke des Mobiltelefons besonders groß, wodurch das Mobiltelefon unhandlich wird.

Eine derzeit gute Lösung der Kameraintegration wird in Mobiltelefonen im "Clam-Shell-Design" (klappbare Mobiltelefone) realisiert. Hier wird die Kamera drehbar in das Drehgelenk der beiden "Mobiltelefonhälften" eingebaut. Mit diesem Mobiltelefon sind sowohl Aufnahmen der Umgebung als auch Selbstportraitaufnahmen bei gleichzeitigem Blick in das Mobiltelefondisplay möglich. Der Nachteil dieser Lösung ist, dass nur sehr kleine Kameramodule und somit qualitativ minderwertige Kameramodule zum Einsatz kommen können, da andernfalls der Durchmesser des Drehgelenkes unakzeptabel groß wird.

Es ist daher Aufgabe der Erfindung, ein Mobiltelefon vorzustellen, bei dem eine hochauflösende und hochwertige Kamera derart in das Mobiltelefon integriert wird, so dass das typische Gerätedesign eines Mobiltelefons erhalten bleibt und außerdem sowohl Aufnahmen der Umgebung als auch Selbstportraitaufnahmen des Mobiltelefonbenutzers ermöglicht werden, wobei die Kameraaufnahmen im Display des Mobiltelefons vom Mobiltelefonbenutzer einzusehen sind und außerdem die Kameraoptik bei Nichtbenutzen der Kamerafunktion vor Verschmutzung und Verkratzen geschützt ist.

Diese Aufgabe wird durch die Merkmale des unabhängigen Patentanspruches 1 gelöst. Vorteilhafte Weiterbildungen der Erfindung sind Gegenstand untergeordneter Patentansprüche.

Die Erfinder haben erkannt, dass es auch bei Mobiltelefonen, die nicht im "Clam-Shell-Design" (klappbare Mobiltelefone) aufgebaut sind, möglich ist, durch einen neuen Schwenkmechanismus, eine hochauflösende und damit meist größere Kamera als die bisher in klappbaren Mobiltelefonen verwendeten Kameras in das Mobiltelefon einzubauen, und dabei das typische Gerätedesign eines Mobiltelefons nicht zu verändern. Zum anderen wird es ermöglicht, dass sowohl Aufnahmen der Umgebung als auch Selbstportraitaufnahmen des Mobiltelefonbenutzers ermöglicht werden, wobei die Kameraaufnahmen im Display des Mobiltelefons zu sehen sind.

Entsprechend diesem allgemeinen Erfindungsgedanken schlagen die Erfinder vor, ein Mobiltelefon mit Kamera, mindestens bestehend aus einem Gehäuse, einem Display und einem Tastenfeld zur Eingabe von manuellen Befehlen, dahingehend zu verbessern, dass die Kamera mit zumindest einem Teil des Tastenfeldes in einer Teilkomponente des Gehäuses fest verbunden ist, wobei die Teilkomponente in einem Rahmen des Gehäuses um mindestens eine Achse relativ zum Display schwenkbar ausgeführt ist und der Rahmen die Teilkomponente zumindest teilweise umläuft.

Durch diese Ausführung des Mobiltelefons ergeben sich folgende Vorteile. Zum einen ist in einer Stellung der Teilkomponente, in der die Kamera vorzugsweise zwischen dem Rahmen und dem Gehäuse angeordnet ist, ein Einwirken von Verschmutzungen auf die Kameraoptik ausgeschlossen. Zum anderen wird durch die schwenkbare Ausführung der Teilkomponente der Erfassungsbereich der Kamera, bei gleichzeitiger Nutzung des Mobiltelefon-Displays als Kontrollbildschirm, erweitert.

Für das Mobiltelefon ist es günstig, wenn die Teilkomponente in einen Winkelbereich von bis zu 90 Grad, vorzugsweise in einem Winkelbereich bis zu 180 Grad, in einer Schwenkrichtung als auch in entgegengesetzter axialen Schwenkrichtung schwenkbar ist. Hierdurch ist es möglich Aufnahmen unter verschieden Winkeln vorzunehmen und das Display beziehungsweise die Kamera an die Bedürfnisse des Mobiltelefonbenutzers anzupassen.

Die Teilkomponente sollte um eine Achse schwenkbar ausgeführt sein, die parallel oder senkrecht zur Längsachse des Mobiltelefons ausgerichtet ist. Hierdurch kann das Display besonders einfach an der horizontalen beziehungsweise der vertikalen Ebene ausgerichtet werden.

Alternativ dazu ist es vorteilhaft, wenn die Teilkomponente um eine schräg zur Längsachse des Mobiltelefons verlaufende Achse, vorzugsweise eine um 45 Grad zur Längsachse verlaufende Achse, schwenkbar ausgeführt ist. Insbesondere, wenn die Teilkomponente dann zusätzlich einen rechteckigen Querschnitt aufweist, ergibt sich hierdurch der Vorteil, dass zwei Seiten des Rechteckes als Flächen zum Einbau von Kameraoptik und Blitzlicht zur Verfügung stehen.

Um die Bedienerfreundlichkeit bei den verschiedenen Mobiltelefonfunktionen wie Telefonieren oder Fotografieren zu erhöhen, ist es weiterhin vorteilhaft, wenn die Teilkomponente in zumindest drei Positionen einrastbar ausgeführt ist. Durch das Einrasten wird gewährleistet, dass, während der Bediener eine Mobiltelefonfunktion ausführt, die Teilkomponente in einer gewünschten Position gehalten und nicht unbeabsichtigt verdreht wird. Es können durchaus zwischen diesen drei Einrastpositionen mehrere "Zwischeneinrastpositionen" vorhanden sein. Für die drei Einrastpositionen sind folgende am günstigsten.

In einer ersten Einrastposition sollte das Objektiv der Kamera derart ausgerichtet sein, dass der Bediener des Mobiltelefons ein Objekt der Umgebung mit dem Objektiv der Kamera erfassen kann und gleichzeitig dieses Objekt im Display des Mobiltelefons sehen kann. Display und Kameraobjektiv sind also auf gegenüberliegenden Seiten des Mobiltelefons ausgerichtet.

Die zweite Einrastposition sollte derart einstellbar sein, dass die Teilkomponente bezüglich dem Display des Mobiltelefons so ausgerichtet ist, dass der Bediener sich selbst mit dem Objektiv der Kamera erfassen kann und gleichzeitig sein Selbstbild im Display sehen kann.

In der dritten Einrastposition befindet sich das Objektiv der Kamera zwischen dem Rahmen des Mobiltelefongehäuses und der Teilkomponente. Diese Einrastposition ist für das konventionelle Telefonieren konzipiert. In dieser Einrastposition ist das Tastenfeld des Mobiltelefons zugänglich.

An der Teilkomponente kann zumindest eine schiebbare und/oder schwenkbare Schutzklappe angeordnet sein, die das Kameraobjektiv vor Beschädigung schützt. Somit kann auch in der Einrastposition eins und zwei, in denen das Kameraobjektiv nicht zwischen Teilkomponente und Rahmen des Gehäuses angeordnet ist, dieses Bauteil vor Verschmutzung und Verkratzen geschützt werden.

Die Teilkomponente des Gehäuses sollte vom restlichen Gehäuse des Mobiltelefons abnehmbar ausgeführt sein. In der Teilkomponente ist die Kamera des Mobiltelefons integriert. Durch diese abnehmbare Ausführung kann die Kamera unabhängig vom restlichen Mobiltelefon eingesetzt werden. Aufgrund der kompakten Außenabmessungen der Teilkomponente im Bereich weniger Zentimetern Kantenlänge, kann die Teilkomponente mit Kamera versteckt in Räumen zu deren Überwachung und dann zum fotographischen Festhalten einer oder mehrerer Raumaufnahmen eingesetzt werden.

Sowohl die Teilkomponente als auch das restliche Gehäuse des Mobiltelefons sollte jeweils eine Spannungsversorgung aufweisen. Hierdurch kann beispielsweise sicher gestellt werden, dass im Falle eines leeren Akkus, aufgrund einer Vielzahl von geschossenen Fotos, bei dem die Kamerafunktion somit momentan nicht mehr zur Verfügung steht, ein Telefonieren mit dem Mobiltelefon aber weiterhin möglich ist.

Es ist vorteilhaft, wenn die Teilkomponente und das restlichen Gehäuse des Mobiltelefons jeweils eine Schnittstelle, vorzugsweise eine Funkverbindungsschnittstelle wie zum Beispiel Bluetooth, aufweist, über die die beiden Teile miteinander kommunizieren. Hierdurch ist es möglich, dass die Teilkomponente mit dem Kameramodul und das restliche Mobiltelefon auch über bestimmte Entfernungen Daten, zum Beispiel Bilddaten, austauschen.

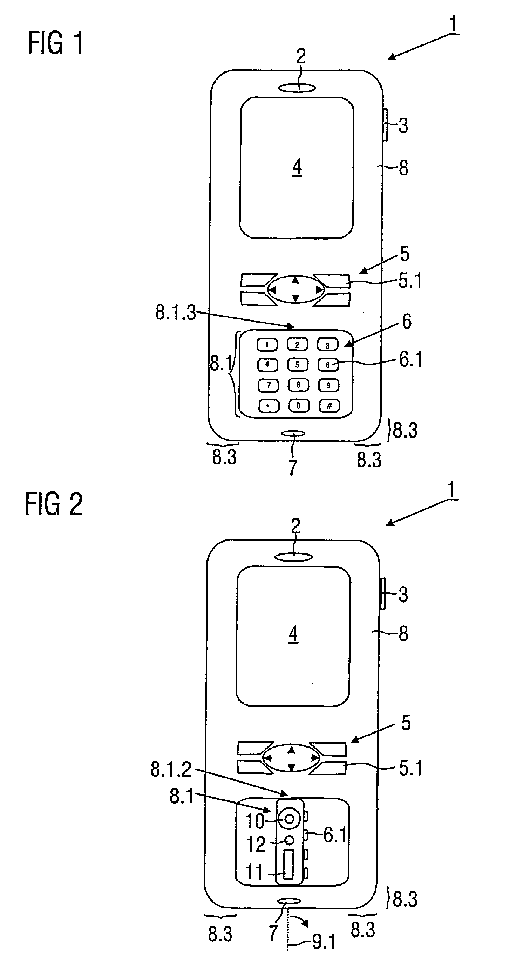

Im Folgenden wird die Erfindung anhand bevorzugter Ausführungsbeispiele mit Hilfe der Figuren 1 bis 12 näher beschrieben, wobei in den Figuren folgende Abkürzungen verwendet werden: 1: Mobiltelefon; 2: Lautsprecher; 3: Kameraknopf; 4: Display des Mobiltelefons; 4.1: Schwenkbares Display; 5: Tastenfeld für Menüeingabe; 5.1: Taste des Menüeingabetastenfelds; 6: Tastenfeld für Ziffern/Buchstabeneingabe; 6.1: Taste des Ziffern/-Buchstabeneingabefelds; 7: Mikrophon; 8: Gehäuse des Mobiltelefons; 8.1: Schwenkbare Teilkomponente des Gehäuses; 8.1.1: Einrastposition "Eins" der Teilkomponente; 8.1.2: Einrastposition "Zwei" der Teilkomponente; 8.1.3: Einrastposition "Drei" der Teilkomponente; 8.2: Abnehmbare und schwenkbare Teilkomponente des Gehäuses; 8.3 Rahmen des Gehäuses 8, der die Teilkomponente 8.1 und 8.2 umläuft; 9.1: Schwenkachse, die parallel zur Längsachse des Mobiltelefons verläuft; 9.2: Schwenkachse, die senkrecht zur Längsachse des Mobiltelefons verläuft; 9.3: Schwenkachse, die schräg zur Längsachse des Mobiltelefons verläuft; 10: Kameraobjektiv; 11: Blitzlicht; 12: Abstandssensor; 13: Schlitz für SIM-Karte (SIM = Subscriber Identify Module); 14: Steckerbuchse für Interface; 15: Schutzklappe für Kameraobjektiv; 16: Schnittstelle.

Die Figuren zeigen im Einzelnen:
- Figur 1:: Mobiltelefon in einer Draufsicht auf das Display und das Tastenfeld;
- Figur 2:: Mobiltelefon mit geschwenkter Teilkomponente des Gehäuses und darin integrierter Kamera;
- Figur 3:: Mobiltelefon aus Figur 2, jedoch ist die Teilkomponente des Gehäuses in die Gegenrichtung geschwenkt;
- Figur 4:: Mobiltelefon mit senkrecht zur Längsachse des Mobiltelefons schwenkbaren Teilkomponente mit integrierter Kamera;
- Figur 5:: Mobiltelefon aus Figur 4, jedoch ist die Teilkomponente des Gehäuses in die Gegenrichtung geschwenkt;
- Figur 6:: Mobiltelefon in einer Draufsicht auf das Display und das Tastenfeld, wobei alle Tasten in der Teilkomponente integriert sind;
- Figur 7:: Mobiltelefon aus Figur 6, bei dem die Teilkomponente nach links geschwenkt ist;
- Figur 8:: Mobiltelefon aus Figur 6, jedoch ist die Teilkomponente senkrecht zur Längsachse des Mobiltelefons geschwenkt;
- Figur 9:: Mobiltelefon aus Figur 7, bei dem die Schwenkachse der Teilkomponente seitlich versetzt ist;
- Figur 10:: Mobiltelefon mit Teilkomponente, die eine schräg verlaufende Schwenkachse aufweist;
- Figur 11:: Mobiltelefon mit abnehmbarer Teilkomponente des Gehäuses;
- Figur 12:: Mobiltelefon, bei dem der Rahmen die Teilkomponente nur teilweise umläuft.

Die Figur 1 zeigt eine Ansicht auf die Bedienfläche eines neuen Mobiltelefons 1 mit Kamera. In dieser Ansicht ist die Kamera des Mobiltelefons 1 nicht erkennbar. Lediglich der Kameraknopf 3 rechts oben am Gehäuse 8 des Mobiltelefons 1 deutet auf das Vorhandensein der Kamera hin. Analog zu bisher bekannten Mobiltelefonen 1 verfügt dieses "Kamerahandy" am oberen Randbereich des Gehäuses 8 über einen Lautsprecher 2 und am unteren Randbereich über ein Mikrofon 7, zur Ausgabe und Eingabe von akustischen Signalen inklusive von Sprachsignalen. In der oberen Hälfte des Gehäuses 8 befindet sich ein Display 4, in dem optisch Funktionsvorgänge des Mobiltelefons 1, zum Beispiel Anrufeingang und Menüübersicht des Mobiltelefons 1, betrachtet werden können. Dieses Display 4 kann beispielsweise ein farbiges TFT-Display sein. Im mittleren Teil des Gehäuses 8 des Mobiltelefons 1 befindet sich das Tastenfeld 5, für die Menüeingabe mit den Tasten 5.1. Über die Tasten 5.1 des Menüeingabetastenfeldes kann zwischen den Menüs des Mobiltelefons 1 geschaltet werden. Im unteren Teil des Gehäuses 8 befinden sich auf dem Tastenfeld 6 für Ziffern-/Buchstabeneingabe die Tasten 6.1, durch die die Zahlen 0 bis 9 und die Buchstaben von a bis z gewählt beziehungsweise gedrückt werden können. Es können mit den Tasten 6.1, zum Beispiel die Wählziffern zum Aufbau einer Telefonverbindung gedrückt werden aber auch Buchstaben zum Schreiben einer Kurznachricht (gebräuchliche Abkürzung SMS), eingegeben werden.

Das Besondere an diesem Mobiltelefon 1 ist, dass eine Teilkomponente 8.1 des Gehäuses 8 des Mobiltelefons 1 in einem Rahmen 8.3 schwenkbar ausgeführt. In dieser Teilkomponente 8.1 ist die Kamera integriert ist. In dieser schwenkbaren Teilkomponente 8.1 ist zusätzlich das Tastenfeld 6 für Ziffern-/Buchstabeneingabe mit integriert. In dieser Darstellung befindet sich die Teilkomponente 8.1 in der Einrastposition "Drei" 8.1.3, das heißt die Kamera des Mobiltelefons 1 ist zwischen Teilkomponente 8.1 und Gehäuse 8 des Mobiltelefons 1 geschützt. In der Einrastposition "Drei" 8.1.3 kann mit dem Mobiltelefon funktionsgemäß telefoniert oder Kurznachrichten ausgetauscht werden.

Um mit diesem Mobiltelefon 1 Fotos aufnehmen zu können, wird die Kamera zwischen der Teilkomponente 8.1 und dem Rahmen 8.3 des Gehäuses 8 des Mobiltelefons 1 "geöffnet", indem die Teilkomponente 8.1 geschwenkt wird.

In Figur 2 ist nun das Kameraobjektiv 10 zu sehen. Hierzu wurde durch einen leichten Druck mit den Fingern auf die rechte Seite des Tastenfeldes 6 für die Zifferneingabe die Teilkomponente 8.1 um die Schwenkachse 9.1, die parallel zur Längsachse des Mobiltelefons 1 verläuft, um 90 Grad nach rechts geschwenkt. Auch in dieser Position der Teilkomponente 8.1 existiert eine weitere Einrastposition "Drei" 8.1.3, damit beim Aufnehmen von Bildern das Kameraobjektiv 10 nicht aus Versehen durch eine Drehung der Teilkomponente 8.1 verwackelt wird. Die Einrastposition "Drei" 8.1.3 eignet sich zum Aufnehmen von Selbstportraits des Mobiltelefonbedieners. In dieser Einrastposition "Drei" 8.1.3 ist sowohl das Kameraobjektiv 10 als auch gleichzeitig das Display 4 des Mobiltelefons 1 vom Mobiltelefonbediener zu sehen. Zusätzlich befindet sich in der Teilkomponente 8.1 ein Blitzlicht 11 für Nachtaufnahmen und ein Abstandssensor 12, der den Abstand des zu fotografierenden Objektes zum Kameraobjektiv misst und dann den Fokus des Kameraobjektivs 10 anpasst.

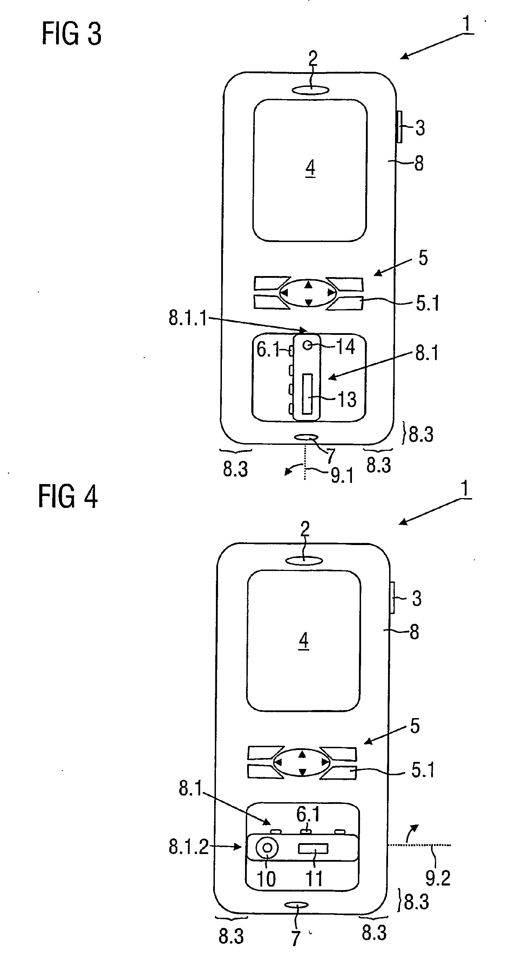

In Figur 3 wird ein Mobiltelefon 1 gezeigt, mit dem Aufnahmen von der Umgebung gemacht werden können. Hierzu wurde beim Mobiltelefon 1 aus Figur 1 durch einen leichten Druck mit den Fingern auf die linke Seite des Tastenfeldes 6 für die Zifferneingabe die Teilkomponente 8.1 um die Schwenkachse 9.1, die parallel zur Längsachse des Mobiltelefons 1 verläuft, um 90 Grad nach links geschwenkt. Auch in dieser Position der Teilkomponente 8.1 existiert eine Einrastposition "Zwei" 8.1.2. Diese Einrastposition "Zwei" 8.1.2 eignet sich zum Aufnehmen von Umgebungsfotos. In dieser Einrastposition der Teilkomponente 8.1 ist das Kameraobjektiv auf der gegenüberliegenden Seite des Displays 4 angeordnet. Durch Drücken des Kameraknopfes 3 kann dann ein Bild fotografiert werden. In dieser Ansicht, auf die Rückseite der Teilkomponente 8.1, ist der Schlitz 13 für die SIM-Karte und die Steckerbuchse 14 für das Interface zu erkennen, die sich gegenüber dem Kameraobjektiv befinden.

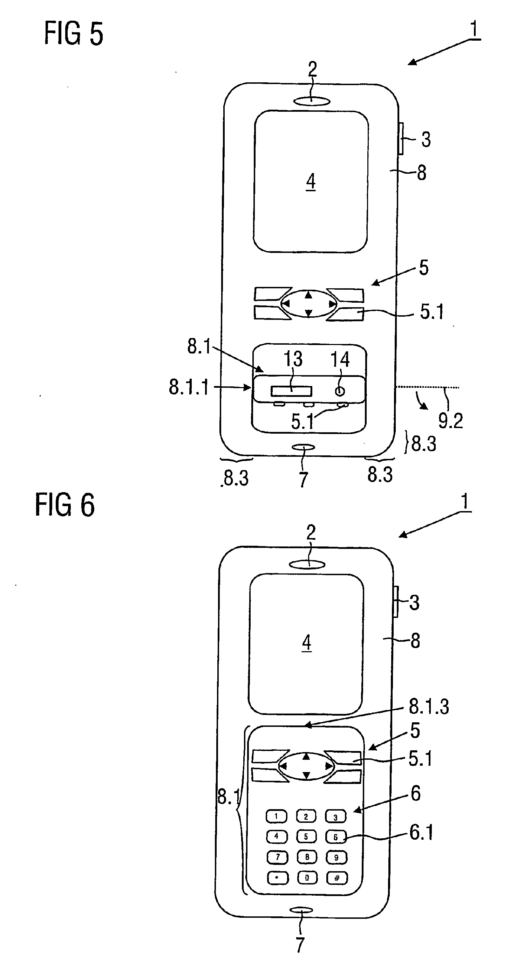

Die Figuren 4 und 5 zeigen in unterschiedlichen Einrastpositionen der Teilkomponente 8.1 eine weiter Ausführung des neuen Mobiltelefons 1. Im Unterschied zu den Figuren 1 bis 3 ist die Teilkomponente 8.1 nun um eine Achse 9.2, die senkrecht zur Längsachse des Mobiltelefons 1 verläuft, schwenkbar. In Figur 4 wir die Teilkomponente 8.1 in der Einrastposition "Zwei" 8.1.2 dargestellt, die geeignet ist, um Selbstportraitaufnahmen des Mobiltelefonbedieners zu machen. Das Display 4 und das Kameraobjektiv 10 sind auf der gleichen Seite des Gehäuses 8 zu sehen. In Figur 5 ist die Teilkomponente 8.1 um 180 Grad gedreht, im Vergleich zur Darstellung in Figur 4.

Die Figuren 6 bis 8 zeigen in unterschiedlichen Einrastpositionen der Teilkomponente 8.1 eine weitere Ausführung des neuen Mobiltelefons 1. Bei dieser Ausführung ist die schwenkbare Teilkomponente 8.1 größer als in den Figuren 1 bis 5 ausgeführt, so dass sowohl das Tastenfeld 5 für Menüeingabe und das Tastenfeld 6 für Ziffern/Buchstabeneingabe neben der Kamera beziehungsweise dem Kameraobjektiv, dem Blitzlicht, dem Abstandssensor 12 dem Schlitz 13 für die SIM-Karte und der Steckerbuchse für das Interface 14 in der Teilkomponente 8.1 integriert sind.

In Figur 6 ist die Teilkomponente 8.1 in der Einrastposition "Drei" 8.1.3, in der mit dem Mobiltelefon funktionsgemäß telefoniert oder Kurznachrichten ausgetauscht werden können.

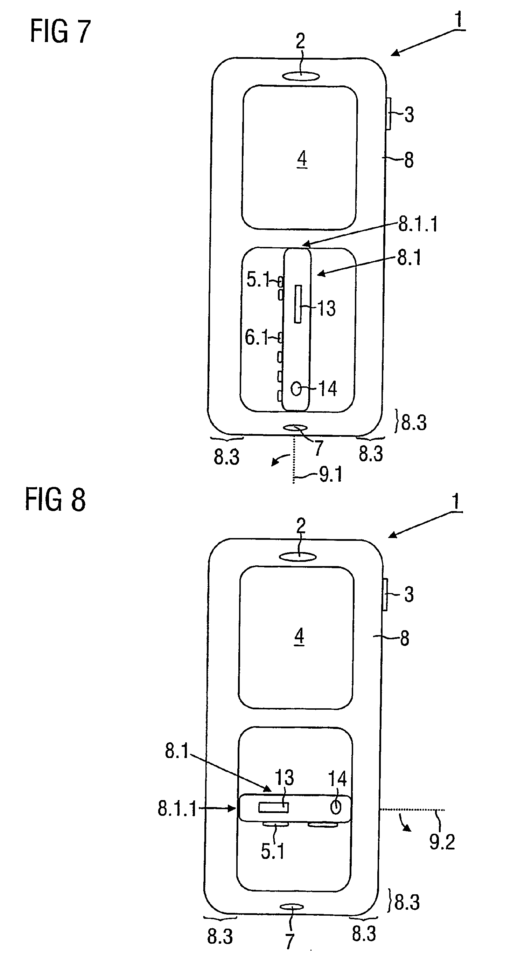

In den Figuren 7 und 8 ist die Teilkomponente 8.1 jeweils in der Einrastposition "Eins" 8.1.1 dargestellt, wobei in Figur 7 die Teilkomponente 8.1 um eine Achse 9.1 und in Figur 8 um eine Achse 9.2 schwenkbar ausgeführt ist.

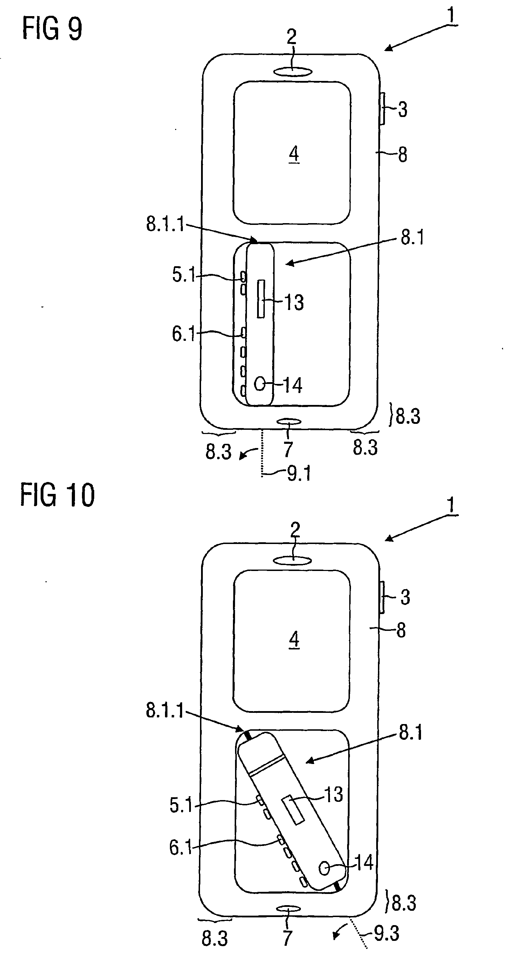

In den Figuren 9 und 10 werden zwei weitere Varianten der Ausgestaltung der schwenkbaren Teilkomponente 8.1 dargestellt. In Figur 9 ist die Teilkomponente 8.1 um eine Achse 9.1 schwenkbar, die parallel zur Längsachse des Mobiltelefons 1 verläuft, aber in Bezug zur Mittenachse nach links versetzt ist. In Figur 10 verläuft die Achse 9.3, um die die Teilkomponente schwenkbar ausgeführt ist, schräg zur Längsachse des Mobiltelefons 1. Der Vorteil an beiden Ausführungen ist, dass durch die größere Hebelwirkung, aufgrund des größeren Abstandes des Druckpunktes zum Ver-/Entriegeln der Teilkomponente 8.1 zum Drehpunkt, die Teilkomponente 8.1 durch eine niedrigere Kraft zwischen den Einrastpositionen (8.1.1 bis 8.1.3) bewegt werden kann.

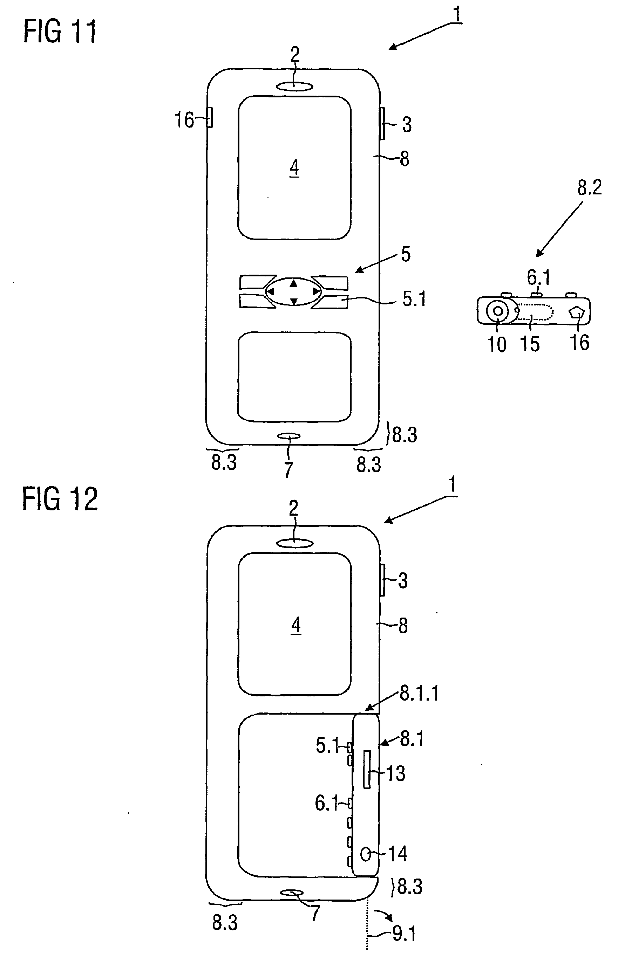

Die Figur 11 zeigt eine weitere besondere Ausführung des neuen Mobiltelefons 1. In dieser Ausführung ist die Teilkomponente 8.2 rechts in Figur 11 vom Gehäuse 8 des Mobiltelefons 1 abnehmbar ausgeführt. Es besteht also die Möglichkeit, die abnehmbare Teilkomponente 8.2 separat vom Gehäuse 8, zu platzieren. Hierdurch kann die Kamera, die in der kompakten und kleinen Teilkomponente 8.2 integriert ist, versteckt platziert werden, ohne das zu erkennen ist, dass eine Fotoaufnahme im Gange ist. Dies wird dadurch realisiert, dass das Gehäuse 8 des "restlichen" Mobiltelefons 1, an dem sich der eigentliche Kameraknopf 3 zum "Auslösen" der Kamera befindet, und der Bediener des Kameraknopfes 3 sich nicht im Bereich der Kamera befinden müssen. Der Datenaustausch beziehungsweise die Kommunikation zwischen der abnehmbaren Teilkomponente 8.2 und dem Gehäuse 8 des "restlichen" Mobiltelefons 1 funktioniert über Schnittstellen 16, die jeweils an der Teilkomponente 8.2 und am Gehäuse 8 des Mobiltelefons 1 angebracht sind. Um die separaten Bauteile des Mobiltelefons 1 mit Strom versorgen zu können, verfügt die Teilkomponente 8.2 und das Gehäuse 8 jeweils über eine eigene Spannungsversorgung, zum Beispiel in Form eines Lithium-Ionen-Akkus. Um das Kameraobjektiv 10 vor Verschmutzung und Verkratzen zu schützen, ist in dieser Ausführung zusätzlich eine Schutzklappe 15 an der Teilkomponente 8.2 angebracht, die bei Nichtbenutzen der Kamera vor das Kameraobjektiv 10 geschoben werden kann.

Die Figur 12 zeigt eine Ausführung eines neuen Mobiltelefons 1, bei der die Teilkomponente 8.1 nur teilweise vom Rahmen 8.3 des Gehäuses 1 umgeben wird.

Insgesamt wird also durch die Erfindung, ein Mobiltelefon mit integrierter Kamera zur Verfügung gestellt, bei dem eine qualitativ hochwertige Kamera derart in das Mobiltelefon integriert ist, so dass das typische Gerätedesign eines Mobiltelefons erhalten bleibt und außerdem sowohl Aufnahmen der Umgebung als auch Selbstportraitaufnahmen des Mobiltelefonbenutzers möglich sind, wobei die Kameraaufnahmen im Display des Mobiltelefons vom Bediener einzusehen sind und außerdem die Kameraoptik bei Nichtbenutzen der Kamerafunktion vor Verschmutzung und Verkratzen geschützt ist.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung wie beantsprucht zu verlassen.

## Patentansprüche

1. Mobiltelefon (1) mit Kamera, mindestens bestehend aus einem Gehäuse (8), einem Display (4) und einem Tastenfeld (5 und 6) zur Eingabe von manuellen Befehlen,
**dadurch gekennzeichnet,**
**dass** die Kamera mit zumindest einem Teil des Tastenfeldes (5 und 6) in einer Teilkomponente (8.1 und 8.2) des Gehäuses (8) fest verbunden ist, wobei die Teilkomponente (8.1 und 8.2) in einem Rahmen (8.3) des Gehäuses (8) um mindestens eine Achse (9.1 bis 9.3) relativ zum Display (4) schwenkbar ausgeführt ist und der Rahmen (8.3) die Teilkomponente (8.1 und 8.2) zumindest teilweise umläuft.

2. Mobiltelefon (1) gemäß dem voranstehenden Patenanspruch 1, **dadurch gekennzeichnet,**
**dass** die Teilkomponente (8.1 und 8.2) in einen Winkelbereich bis zu 90 Grad, vorzugsweise in einem Winkelbereich bis zu 180 Grad, in einer Schwenkrichtung als auch in entgegengesetzter axialen Schwenkrichtung schwenkbar ist.

3. Mobiltelefon (1) gemäß einem der voranstehenden Patenansprüche 1 und 2,
**dadurch gekennzeichnet,**
**dass** die Teilkomponente (8.1 und 8.2) um eine Achse schwenkbar ausgeführt ist, die parallel (9.1) oder senkrecht (9.2) zu Längsachse des Mobiltelefons (1) ausgerichtet ist.

4. Mobiltelefon (1) gemäß einem der voranstehenden Patenansprüche 1 bis 3,
**dadurch gekennzeichnet,**
**dass** die Teilkomponente (8.1 und 8.2) um eine schräg zur Längsachse des Mobiltelefons verlaufende Achse (9.3), vorzugsweise eine um 45 Grad zur Längsachse verlaufende Achse, schwenkbar ausgeführt ist.

5. Mobiltelefon (1) gemäß einem der voranstehenden Patenansprüche 1 bis 4,
**dadurch gekennzeichnet,**
**dass** die Teilkomponente (8.1 und 8.2) in zumindest drei Positionen (8.1.1 bis 8.1.3) einrastbar ausgeführt ist.

6. Mobiltelefon (1) gemäß dem voranstehenden Patenanspruch 5,
**dadurch gekennzeichnet,**
**dass** in einer ersten Einrastposition (8.1.1) das Objektiv der Kamera (10) derart ausgerichtet ist, dass der Bediener des Mobiltelefons (1) ein Objekt der Umgebung mit dem Objektiv der Kamera (10) erfassen kann und gleichzeitig dieses Objekt im Display (4) des Mobiltelefons (1) sehen kann.

7. Mobiltelefon (1) gemäß einem der voranstehenden Patenansprüche 5 und 6,
**dadurch gekennzeichnet,**
**dass** in einer zweiten Einrastposition (8.1.2) das Objektiv der Kamera (10) derart ausgerichtet ist, dass der Bediener sich selbst mit dem Objektiv der Kamera (10) erfassen kann und gleichzeitig sein Selbstbild im Display (4) des Mobiltelefons (1)sehen kann.

8. Mobiltelefon (1) gemäß einem dem voranstehenden Patenansprüche 5 bis 7,
**dadurch gekennzeichnet,**
**dass** in einer dritten Einrastposition (8.1.3) sich das Objektiv der Kamera (10) zwischen dem Rahmen (8.3) des Mobiltelefons (1) und der Teilkomponente (8.1 und 8.2) befindet.

9. Mobiltelefon (1) gemäß einem der voranstehenden Patenansprüche 1 bis 8, **dadurch gekennzeichnet,**
**dass** an der Teilkomponente (8.1 und 8.2) zumindest eine schiebbare und/oder schwenkbare Klappe (15) angeordnet ist, die das Kameraobjektiv (10) vor Beschädigung schützt.

10. Mobiltelefon (1) gemäß einem der voranstehenden Patenansprüche 1 bis 9,
**dadurch gekennzeichnet,**
**dass** die Teilkomponente (8.2) des Gehäuses (8) vom restlichen Gehäuse des Mobiltelefons (1) abnehmbar ausgeführt ist.

11. Mobiltelefon (1) gemäß einem der voranstehenden Patenansprüche 1 bis 10,
**dadurch gekennzeichnet,**
**dass** sowohl die Teilkomponente (8.1 und 8.2) als auch das restliche Gehäuse des Mobiltelefons (1) eine Spannungsversorgung aufweisen.

12. Mobiltelefon (1) gemäß einem der voranstehenden Patenansprüche 1 bis 11,
**dadurch gekennzeichnet,**
**dass** die Teilkomponente (8.1 und 8.2) und das restliche Gehäuse des Mobiltelefons (1) jeweils eine Schnittstelle (16), vorzugsweise eine Funkverbindungsschnittstelle, vorzugsweise Bluetooth, aufweist, über die die beiden Teile miteinander kommunizieren.

## Claims

1. Mobile telephone (1) having a camera, comprising at least a housing (8), a display (4) and a keypad (5 and 6) for inputting manual commands, **characterized in that** the camera is firmly connected to at least a part of the keypad (5 and 6) in a component element (8.1 and 8.2) of the housing (8), with the component element (8.1 and 8.2) being designed such that it can swivel relative to the display (4) about at least one axis (9.1 to 9.3) in a frame (8.3) of the housing (8) and with the frame (8.3) at least partially surrounding the component element (8.1 and 8.2).

2. Mobile telephone (1) according the preceding Patent Claim 1, **characterized in that** the component element (8.1 and 8.2) can be swivelled in one swivelling direction as well as in the opposite axial swivelling direction in an angle range of up to 90 degrees, in particular in an angle range of up to 180 degrees.

3. Mobile telephone (1) according to one of the preceding Patent Claims 1 and 2, **characterized in that** the component element (8.1 and 8.2) is designed such that it can be swivelled about an axis which is aligned parallel (9.1) or at right angles (9.2) to the longitudinal axis of the mobile telephone (1).

4. Mobile telephone (1) according to one of the preceding Patent Claims 1 to 3, **characterized in that** the component element (8.1 and 8.2) is designed such that it can be swivelled about an axis (9.3) which runs obliquely with respect to the longitudinal axis of the mobile telephone, preferably an axis which runs at 45 degrees to the longitudinal axis.

5. Mobile telephone (1) according to one of the preceding Patent Claims 1 to 4, **characterized in that** the component element (8.1 and 8.2) is designed such that it can be latched in in at least three positions (8.1.1 to 8.1.3).

6. Mobile telephone (1) according to the preceding Patent Claim 5, **characterized in that** the objective of the camera (10) is aligned in a first latched-in position (8.1.1) in such a way that the operator of the mobile telephone (1) can record an object in the surrounding area with the objective of the camera (10) and can at the same time see this object in the display (4) of the mobile telephone (1).

7. Mobile telephone (1) according to one of the preceding Patent Claims 5 and 6, **characterized in that** the objective of the camera (10) is aligned in a second latched-in position (8.1.2) in such a way that the operator can record himself with the objective of the camera (10) and can at the same time see his own image in the display (4) on the mobile telephone (1).

8. Mobile telephone (1) according to one of the preceding Patent Claims 5 to 7, **characterized in that**, in a third latched-in position (8.1.3), the objective of the camera (10) is located between the frame (8.3) of the mobile telephone (1) and the component element (8.1 and 8.2).

9. Mobile telephone (1) according to one of the preceding Patent Claims 1 to 8, **characterized in that** at least one flap (15) which can be moved and/or swivelled is arranged on the component element (8.1 and 8.2) and protects the camera objective (10) against damage.

10. Mobile telephone (1) according to one of the preceding Patent Claims 1 to 9, **characterized in that** the component element (8.2) of the housing (8) is designed such that it can be removed from the rest of the housing of the mobile telephone (1).

11. Mobile telephone (1) according to one of the preceding Patent Claims 1 to 10, **characterized in that** both the component element (8.1 and 8.2) and the rest of the housing of the mobile telephone (1) have a voltage supply.

12. Mobile telephone (1) according to one of the preceding Patent Claims 1 to 11, **characterized in that** the component elements (8.1 and 8.2) and the rest of the housing of the mobile telephone (1) each have an interface (16), preferably a radio link interface and preferably Bluetooth, via which the two parts communicate with one another.

## Revendications

1. Téléphone mobile (1) muni d'une caméra, au moins constitué d'un boîtier (8), d'un écran (4) et d'un clavier (5 et 6) pour l'entrée d'instructions manuelles,
**caractérisé en ce**
**que** la caméra est raccordée de manière fixe à au moins une partie du clavier (5 et 6) dans un composant partiel (8.1 et 8.2) du boîtier (8), le composant partiel (8.1 et 8.2) étant exécuté dans un cadre (8.3) du boîtier (8) de manière pivotante autour d'au moins un axe (9.1 à 9.3) par rapport à l'écran (4) et le cadre (8.3) entourant le composant partiel (8.1 et 8.2), du moins en partie.

2. Téléphone mobile (1) selon la revendication précédente 1,
**caractérisé en ce**
**que** le composant partiel (8.1 et 8.2) est pivotable dans une direction de pivotement aussi bien qu'en direction de pivotement axialement opposée, dans une plage angulaire allant jusqu'à 90°, de préférence dans une plage angulaire allant jusqu'à 180°.

3. Téléphone mobile (1) selon l'une des revendications précédentes 1 et 2,
**caractérisé en ce**
**que** le composant partiel (8.1 et 8.2) est exécuté de manière pivotable autour d'un axe qui est orienté parallèlement (9.1) ou perpendiculairement (9.2) à l'axe longitudinal du téléphone mobile (1).

4. Téléphone mobile (1) selon l'une quelconque des revendications précédentes 1 à 3,
**caractérisé en ce**
**que** le composant partiel (8.1 et 8.2) est exécuté de manière pivotable autour d'un axe (9.3) s'étendant de manière inclinée par rapport à l'axe longitudinal du téléphone mobile, de préférence autour d'un axe s'étendant à 45° par rapport à l'axe longitudinal.

5. Téléphone mobile (1) selon l'une quelconque des revendications précédentes 1 à 4,
**caractérisé en ce**
**que** le composant partiel (8.1 et 8.2) est exécuté de manière encliquetable dans au moins trois positions (8.1.1 à 8.1.3).

6. Téléphone mobile (1) selon la revendication précédente 5,
**caractérisé en ce**
**que**, dans une première position d'encliquetage (8.1.1), l'objectif de la caméra (10) est orienté de telle manière que l'opérateur du téléphone mobile (1) peut détecter un objet des environs avec l'objectif de la caméra (10) et voir cet objet simultanément sur l'écran (4) du téléphone mobile (1).

7. Téléphone mobile (1) selon l'une des revendications précédentes 5 et 6,
**caractérisé en ce**
**que**, dans une deuxième position d'encliquetage (8.1.2), l'objectif de la caméra (10) est orienté de telle manière que l'opérateur peut se détecter lui-même avec l'objectif de la caméra (10) et voir en même temps sa propre image sur l'écran (4) du téléphone mobile (1).

8. Téléphone mobile (1) selon l'une quelconque des revendications précédentes 5 à 7,
**caractérisé en ce**
**que**, dans une troisième position d'encliquetage (8.1.3), l'objectif de la caméra (10) se trouve entre le cadre (8.3) du téléphone mobile (1) et du composant partiel (8.1 et 8.2).

9. Téléphone mobile (1) selon l'une quelconque des revendications précédentes 1 à 8,
**caractérisé en ce**
**qu'**au moins un couvercle (15) coulissant et/ou pivotable est disposé sur le composant partiel (8.1 et 8.2), ce couvercle protégeant l'objectif de la caméra (10) contre des détériorations.

10. Téléphone mobile (1) selon l'une quelconque des revendications précédentes 1 à 9,
**caractérisé en ce**
**que** le composant partiel (8.1 et 8.2) du boîtier (8) est exécuté de manière amovible par rapport au reste du boîtier du téléphone mobile (1).

11. Téléphone mobile (1) selon l'une quelconque des revendications précédentes 1 à 10,
**caractérisé en ce**
**qu'**aussi bien le composant partiel (8.1 et 8.2) que le reste du boîtier du téléphone mobile (1) présentent une alimentation en courant.

12. Téléphone mobile (1) selon l'une quelconque des revendications précédentes 1 à 11,
**caractérisé en ce**
**que** le composant partiel (8.1 et 8.2) et le reste du boîtier du téléphone mobile (1) présentent respectivement une interface (16), de préférence une interface de liaison radio, de préférence Bluetooth, par l'intermédiaire de laquelle les deux parties communiquent entre elles.
